**Europäisches Patentamt**

(19) **European Patent Office**

**Office européen des brevets**

(11) Publication number: **0 151 115**
**B1**

(12) **EUROPEAN PATENT SPECIFICATION**

(45) Date of publication of patent specification: **28.02.90**

(51) Int. Cl.⁵: **G 01 N 29/04**

(21) Application number: **83902599.6**

(22) Date of filing: **14.07.83**

(86) International application number:
**PCT/US83/01080**

(87) International publication number:
**WO 85/00429 31.01.85 Gazette 85/03**

(60) **Divisional applications 88108061, 88108062 filed on 19.05.88.**

(54) **ULTRASONIC LEAK DETECTING METHOD AND APPARATUS.**

(43) Date of publication of application:
**14.08.85 Bulletin 85/33**

(45) Publication of the grant of the patent:
**28.02.90 Bulletin 90/09**

(84) Designated Contracting States:
**AT BE CH DE FR GB LI NL SE**

(56) References cited:
**US-A-2 665 257**
**US-A-3 222 635**
**US-A-3 264 864**
**US-A-3 308 424**
**US-A-3 374 663**
**US-A-3 508 433**
**US-A-3 592 967**
**US-A-3 978 915**

(73) Proprietor: **UE SYSTEMS INC.**
**1995 Broadway**
**New York, NY 10023 (US)**

(72) Inventor: **GOODMAN, Mark**
**1619 Third Avenue**
**New York, NY 10023 (US)**
Inventor: **ZENO, John, Richard**
**221 W. 22nd Street**
**New York, NY 10011 (US)**
Inventor: **BORRUSO, Marty**
**1336 71st Street**
**Brooklyn, NY 11218 (US)**

(74) Representative: **Kehl, Günther, Dipl.-Phys. et al**
**Patentanwälte Hagemann & Kehl Ismaninger**
**Strasse 108 Postfach 86 03 29**
**D-8000 München 86 (DE)**

Courier Press, Leamington Spa, England.

## Description

This invention relates to ultrasonic apparatus and more particularly, to methods and apparatus for detecting leaks and malfunctions of mechanical parts by ultrasonic means.

It is well known that ultrasonic generators and detectors can be used to locate leaks, e.g. in pipes. Such a system is shown in U.S. Patent No. 3,978,915 to Harris. In that arrangement ultrasonic generators are positioned in a chamber through which the pipes pass. At the ends of these pipes, exterior to the chamber, ultrasonic detectors are located. At the point where a leak occurs in the pipe or the pipe wall is thin, the ultrasonic energy will enter the pipe and travel along the pipe to the end where the detector resides. Thus the detector will receive a signal indicating the existance of this leak or weak spot. Since ultrasonic energy used for such purposes is generally in the range of 40 KHz, it is too high in frequency to be heard by a human being. Thus, means are provided for heterodyning or frequency shifting the detected signal into the audio range and various schemes are available for doing this.

By locating an ultrasonic generator in a closed chamber, a standing wave pattern with peaks and nodes, is established. If a node occurs at the position of a leak or weak spot, no ultrasonic energy will escape and the defect will not be detected.

US—A—3,508,433 discloses a pipeline leak detector using the ultrasonic characteristics of typical leaks, which eliminates background noise by filtering out the audio frequency noise. The ultrasonic spectrum of the leak is electrically demodulated to provide a DC-signal proportional to the noise level rather than the noise itself. Means are provided for detecting predetermined ranges of the ultrasonic frequency spectrum and beating a variable frequency oscillator frequency thereagainst to produce a difference frequency in the audio range for subsequent demodulation. In case of occuring of standing wave patterns with peaks and nodes it may occur that a position of a leak or a weak spot will not be detected, if a node occurs in the region of the leak or the weak spot. Further the electronic evaluation circuit of the known device may incorrectly generate an alarm signal, if some of the carrier wave generated by a sweep oscillator will leak through due to temperature and voltage variations.

US—A—3,308,424 discloses an apparatus including an ultrasonic transducer for receiving ultrasonic vibrations and converting them into an electric signal. Circuit means are provided for converting the signal into audible sound so that the ultrasonic vibration can be heard by an operator. The apparatus provided can reach areas of difficult accessibility and monitor extensive regions quickly for ultrasonic vibrations.

US—A—2,665,257 discloses a method for the detection of leaks in conduits and vessels containing gaseous fluids under pressure and is especially directed to a composition of matter useful for forming a film into which the gaseous fluid escaping from a leak may be trapped in bubbles sufficiently persistent to permit location of the leak by visual observation, even though the gaseous fluid be escaping only through a minute aperture imperceptable to the naked eye. However, this reference does not disclose a method for detecting leaks by the use of ultrasonic devices.

In certain instances, e.g. in detecting the malfunctions of bearings, an ultrasonic detector is mechanically coupled to the casing of the bearings so that the vibrations caused by the malfunction can be mechanically transmitted to it. With such an arrangement the frequency is not set by an ultrasonic generator, but is created by the mechanical vibration itself. In such a case the ultrasonic detector circuit must be capable of sweeping over a band of frequencies to locate the one that is characteristic of the malfunction. This is usually accomplished by a heterodyning circuit which can be tuned to various frequencies, much in the manner of a radio receiver.

The present invention is directed to providing improved methods and apparatus for detecting leaks and mechanical faults by ultrasonic means. As regards the apparatus this is accomplished by providing an apparatus for indicating the presence of ultrasonic energy comprising an ultrasonic generator for producing an electrical oscillation in a narrow ultrasonic band of frequencies, including sweep means for causing the output of said ultrasonic generator to vary within a narrow band of frequencies at a periodic frequency rate that is no higher than the upper limit of the audio range, an ultrasonic transducer means for converting ultrasonic energy into electrical energy having a related ultrasonic frequency, an amplifier means for amplifying the electrical energy produced by said transducer means to produce an amplified ultrasonic signal, a heterodyne means for translating the frequency of the amplified ultrasonic signal into the audio frequency range by modulating it with a carrier frequency signal whose frequency differs from the ultrasonic frequency by a frequency within the audio range, an indicator means responsive to the amplitude of the audio frequency signal for indicating an output level related to the level of the ultrasonic energy and is characterized in that said heterodyne means include a carrier frequency signal generator and a suppressed-carrier amplitude modulator means for modulating said amplified ultrasonic signal with said carrier signal to produce an output audio frequency signal related to the amplified ultrasonic signal, said heterodyne means further including a feedback means for assuring suppressed-carrier operation of said suppressed-carrier modulator means by feeding part of the output signal of said modulator means back to said suppressed-carrier modulator means, said suppressed-carrier modulator means producing suppressed-carrier operation when a particular bias voltage is applied to it and said heterodyne means further including variable bias voltage source means for supplying the bias voltage to said suppressed-carrier modulator means.

The detector arrangement used with the present invention preferably has more than one transducer connected in series and spacially aligned in one plane such that each transducer receives the energy generated. To avoid degradation of the signal from this arrangement due to loading from the preamplifier, a field-effect transistor is used as the input to the preamplifier. When a particular frequency is expected from an ultrasonic generator, a tank ciruit can be located at the input to the field effect transistor to intensify that signal and to eliminate signals which differ therefrom.

The shift of the ultrasonic frequency into the audible range, so that a user may hear it or a meter may display it, can be accomplished with an integrated circuit function generator arranged to provide AM suppressed carrier operation. When such an integrated circuit is biased to the middle of its range, the carrier signal it is intended to produce, i.e. a signal slightly different than the received ultrasonic signal, will be suppressed. By adding the ultrasonic signal to the biasing level for this circuit, the output will be only the sum and difference signals between the ultrasonic input and the carrier generated by the circuit. The sum signal is filtered out and the difference signal is used to drive headphones with which one can listen for leaks, or a meter by which to incidate them. The bias for establishing the suppressed carrier operation is under the control of a feedback loop which senses when carrier signal is present in the output signal, integrates the sensed carrier signal over a period of time to arrive at an average value, and uses the average value to vary the bias such as the carrier signal is eliminated.

As regards the method for detecting leaks the above mentioned object is accomplished by a method of detecting small openings or thin spots in a container, involving the steps of positioning a source of ultrasonic energy within said container, detecting the exsistance of ultrasonic energy outside the container with an ultrasonic detector including a modulator that converts ultrasonic energy into energy in the audio range and locating the origin of the ultrasonic energy outside the container by passing the ultrasonic detector over the outer surface of the container to locate the position at which the largest audio energy signal is obtained. The method is characterized by the step of sweeping the frequencies of the ultrasonic source over a band of frequencies at a rate below the upper limit of the audio range so that no standing wave node continuously exists at one location on the surface of the container and assuring suppressed-carrier operation by feeding part of the modulator output back to the modulator.

Brief Description of the Drawings

The foregoing and other features of the present invention will be more readily apparent from the following detailed description and drawings of an illustrated embodiment of the invention in which:

Fig. 1 is a diagram illustrating the overall circuit arrangement for the present invention and its use in connection with the detection of a leak;

Fig. 2 is a schematic diagram of the ultrasonic generator shown in Fig. 1; and

Fig. 3 is a schematic diagram of the transducer and preamplifier shown in Fig. 1.

Description of an Exemplary Embodiment

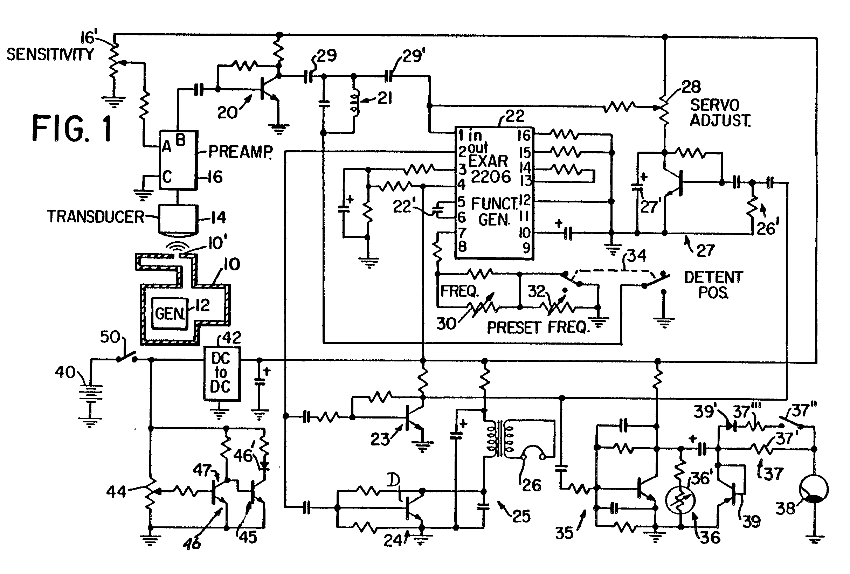

Fig. 1 represents a block diagram of an apparatus and method for ultrasonically detecting mechanical faults, for example bearing failures and leaks in containers. By way of example, a container 10 is illustrated. Located within the container is an ultrasonic generator 12 which produces ultrasonic sound waves in the vicinity of, e.g., 40 kHz. According to the present invention this generator produces an output which is frequency modulated about its 40 kHz center frequency at a much lower frequency, for example 5—20 Hz. By means of this variation in the output of the generator, the standing wave pattern created within the container varies such that the standing wave nodes do not remain constant at one position.

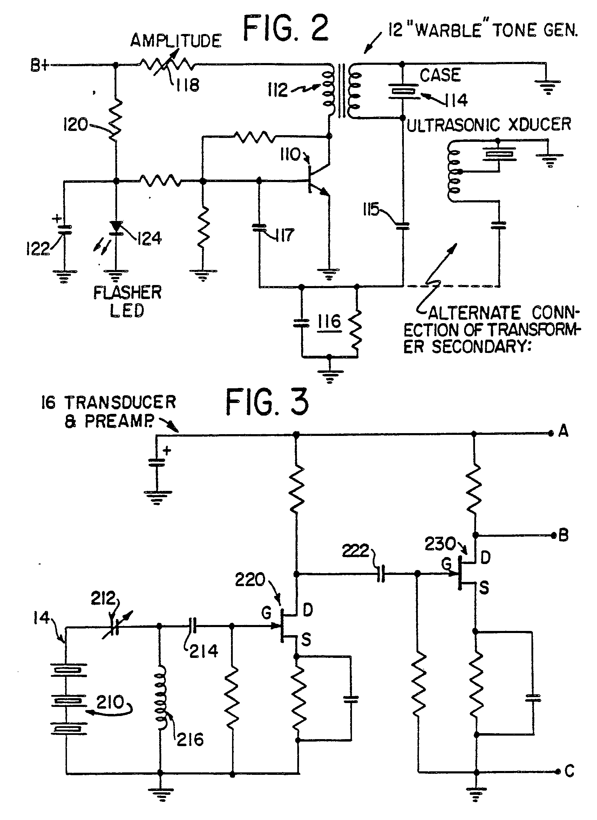

At position 10' there is a small hole in the container 10 from which ultrasonic energy may escape and be detected by an ultrasonic transducer 14. The output of the transducer 14 is applied to a field-effect transistor preamplifier 16 whose gain is under the control of sensitivity control 16', which varies the supply voltage to the preamplifier as shown in Fig. 3.

From the preamplifier 16 the ultrasonic signal is delivered to a transistor driver amplifier 20 which amplifies it again and in turn capacitively couples it to the input (pin 1) of a function generator 22 via capacitors 29, 29'. The generator 22 acts to frequency shift the amplified ultrasonic signal into the audible frequency range. This audio signal from the output (pin 2) of circuit 22 is applied to a headphone transistor amplifier 24 which may include a Darlington transistor arrangement as indicated by the letter $D$ on the drawing. From the amplifier 24 it passes via a filter and transformer 25 to a set of headphones 26. The filter acts to eliminate the carrier and any extraneous frequencies, e.g. the sum signal, from the signal applied to the headphones. Circuit 22 also has its output applied through a transistor driver amplifier 23 to a frequency-compensated meter amplifier circuit 35. Filter elements in circuit 35 also act to cancel the carrier signal and any extraneous signal, leaving only the audio signal. Following the amplifier 35 there is a temperature compensation circuit 36 and a meter signal conditioning circuit 37 whose output is applied to a meter 38. Circuit 37 acts to put the signal in proper condition for display by the meter 38.

Temperature compensation circuit 36 includes a thermistor 36' which is part of a voltage divider network leading to the meter signal condition circuit 37. As a result, an increase in temperature will cause the proportion of voltage applied to the meter circuit to be changed in such a way as to compensate for the change in gains due to the temperature increase.

In meter signal condition circuit 37 there are two diodes, one in the form of a germanium transistor 39 which is wired as a diode. The effect of this diode is to rectify the AC signal received so as to generate a DC signal for application to the meter. This DC signal is ordinarily applied through resistor 37' to the meter. When the meter is to be operated in a logarithmic mode, a switch 37'' is closed, placing a diode 39' and resistor 37'''' across resistor 37'. Resistor 37'''' is significantly smaller than resistor 37' and thus changes the scale for the meter. In addition the diode 39' in series with resistor 37'''' acts to create a voltage threshold which eliminates noise in the circuit when it is in the more sensitive logarithmic scale.

As a result of the arrangement of Fig. 1, ultrasonic signals leaking from container 10 are picked up by transducer 14, amplified and frequency shifted so that a user will have an indication of the existence of a leak through the sound heard in headphones 26 and level displayed on meter 38.

The actual frequency shift of the ultrasonic signal is accomplished in function generator 22. This generator may be a commercially-available integrated circuit, such as the EXAR 2206, which has been wired to produce sine wave outputs at a frequency determined by tuning resistor 30 connected to pin 7 of the circuit as well as capacitor 22' connected between pins 5 and 6. One characteristic of this circuit is that a particular bias applied to its input (pin 1) will cause it to produce an amplitude-modulated (AM), suppressed-carrier output. The bias to obtain this suppressed-carrier modulation is derived from variable resistor 28. If capacitor 22' and resistor 30 are selected to produce a carrier signal that differs from the ultrasonic signal by a frequency in the audio band, the output of circuit 22 will be an audio signal related to the input ultrasonic signal and a much higher signal. In particular the output signal will be equivalent to the sum and difference frequencies of the ultrasonic signal and the carrier signal generated by circuit 22, but the carrier signal itself will not be present in the output. If, for example, resistance 30 is set so that circuit 22 generates a 42 kHz signal and the ultrasonic signal applied through capacitors 29 and 29' to circuit 22 is at 40 kHz, the output will be at 2 kHz and at 82 kHz. Since only the audio band signal is desired, filter circuits 25 and 35 are designed to eliminate the 82 kHz sum signal.

Although a proper bias on the input to circuit 22 will eliminate or suppress the carrier generated by that circuit, it has been found that this adjustment is critical and some carrier may leak through due to temperature and voltage variations. Also as the carrier frequency is changed due to changes in the setting of resistor 30 there are changes in the circuit operation that may cause the carrier to appear in the output unless there is an adjustment of the bias. In order to provide this adjustment a servo or feedback network is provided. In particular the output of circuit 22 (pin 2) is applied through driver circuit 23 to a highpass filter 26' which passes only frequencies above 20 kHz. The output of filter 26' is applied to a Darlington transistor arrangement that forms amplifier 27. Amplifier 27 acts to amplify and integrate or average, via capacitor 27', the carrier signal received. This signal is also inverted in the amplifier so as to vary the bias from resistor 28 in such a way as to correct for the presence of the carrier in the output signal. Although some carrier may always exist, sufficient to create an error signal, this level will be low enough to avoid erroneous indications in the earphones 26 and the meter 38.

In one embodiment of the present invention the transducer is used to detect vibrations, for example from bearings, through a direct mechanical connection between the noise source, e.g., the bearing housings, and the transducer crystals. In such a case the bandwidth of signals detected may range from 20 kHz to 100 kHz, and particular bands of this frequency range may be selected by changing the position of variable resistor 30 so as to create a carrier frequency in circuit 22 which moves over this range.

In another embodiment the transducer is located in space at some distance from a hole in a container that has 40 kHz generator 12 within it. In such a case the preferred 40 kHz mode of operation of the detector is used.

When operating in this acoustic pick-up mode where the transducer is held in space, the main tuning resistance 30 is rotated to a detent at one end. Near this detent the resistance of main tuning resistor 30 drops to near zero. Upon entering the detent, a switch 34 changes position, thereby connecting preset resistor 32 into the frequency control line for circuit 22 and enabling a 40 kHz resonant filter 21. The resonant filter 21 acts to boost frequencies in the 40 kHz range and to eliminate those substantially outside this band of frequencies. Resistor 32 acts to set the frequency of circuit 22 at some value in the vicinity of 40 kHz, e.g. 42 kHz.

Power for the circuit of Fig. 1 is created by a battery 40 which is applied through power switch 50 to a DC-to-DC converter 42 that generates a 15 volt output applied to the various parts of the circuit. positioned across the battery input to the DC-to-DC converter is a recharging indicator circuit which includes elements 44—47. When the power switch 50 is closed, the voltage from battery 40 applies bias to transistors 45 and 47, which are Darlington transistor arrangements. Variable resistor 44 is set such that transistor 47 is turned on, thereby turning transistor 45 off. When the battery voltage drops, however, the bias on the base of transistor 47 becomes insufficient to cause it to remain in the conduction state. As it turns off, it causes transistor 45 to turn on, which causes current to be drawn through light emitting diode 46'. This diode indicates when the battery must be recharged. It has been found that through the use of cascaded arrangements of Darlington transistors, such as transistors 45 and 47, the circuit has a sharp response so that a particular level of degradation in the amplitude of the battery voltage can be set by variable resistance 44 and it will be accurately indicated.

Now that the details of the receiver and frequency conversion circuits have been described, reference will be made to the ultrasonic generator 12, the details of which are shown in Fig. 2. This generator is typically set to produce an output ultrasonic signal at approximately 40 kHz. To accomplish this a 40 kHz crystal transducer 114, such as that made by Panasonic Corp., is employed in the feedback circuit of an oscillator which includes transistor 110. When the circuit is turned on, current initially flows from the power supply through an amplitude control resistance 118 and the primary of a step-up transformer 112 to transistor 110. This creates a voltage level across the crystal transducer 114 which will begin to resonate at its fundamental frequency of 40 kHz. The resonant frequency from transducer 114 is passed to the base of transistor 110 through a filter network comprising capacitor 115, a parallel combination 116 of a capacitor and resistor, and capacitor 117. This filter network passes signals in the 40 kHz range and eliminates harmonics. Inversion of the feedback signal in order to have the positive feedback needed for oscillation is by means of the wiring of the secondary of tranformer 112 which is connected across transducer 114. With this arrangement the crystal will be driven at its resonant frequency of 40 kHz and will produce an ultrasonic wave at that frequency.

If the generator is located within a container, such as container 10 shown in Fig. 1, the ultrasonic energy produced by the crystal will fill the container and will leak out of the container at openings, such as hole 10'. When in a container, however, a constant output from transducer 114 will result in the establishment of standing waves in the container. Thus it is possible that a null of the standing wave will occur at the position of the leak 10', which would result in failure to detect the leak. To compensate for this, generator 12 causes the standing wave pattern to vary slowly by varying its output frequency. This is accomplished by means of resistor 120, capacitor 122 and flasher light-emitting diode 24, e.g., a Litronix Flasher Mod. FRL—4403. With this arrangement current flows through resistor 120 and charges up capacitor 122. As it charges it changes the bias on transistor 110, which results in a frequency shift in the oscillator of perhaps 2—5 kHz. When the breakdown voltage of the flasher 124 is reached it will discharge the voltage across capacitor 122 and the process will repeat. Typically the resistance 120 and capacitor 122 are selected so that the variation in frequency occurs at a subaudio rate, e.g. 5—20 Hz. However, any convenient frequency variation can be selected.

The circuit of Fig. 2 can be altered by replacing the flasher LED with some other type of voltage breakdown device. Also, the secondary of transformer 112 can be wired as shown in Fig. 2 so there is no voltage step-up. This arrangement lowers the impedance across the crystal, thereby lowering its Q and increasing the frequency variation achieved.

By varying the frequency output at a slow rate, not only is the problem of node points avoided, it is psychologically easier for a listener to detect leaks. In addition the receiver circuit could be modified so as to respond only to this varying frequency, thus making it more sensitive and improving its signal-to-noise ratio.

The transducer and preamplifier which detect the signal produced by the generator of Fig. 2 are shown in the schematic of Fig. 3. In Fig. 3 a group of series-connected ultransonic transducers are shown for receiving ultrasonic energy and converting it into electrical energy. Each transducer may be a 40 kHz piezoelctric crystal, such as those manufactured by panasonic Corporation. While three such crystals are shown in Fig. 3, the number of such crystals is not critical and two, or more than three, may be employed. By arranging these transducers adjacent to each other in one plane, each receives acoustic energy and the electrical signals created thereby are added because of the series connection, thereby giving a larger output than when a single transducer is used. The effectiveness of such an arrangement of transducers could be reduced if the impedance of the preamplifier is low. To avoid this a field-effect transistor preamplifier is used with an input stage field-effect transistor 220. The output of this transistor is applied through capacitor 222 to field-effect transistor 230. The drain of transistor 230 is the ouput of the preamplifier that is connected to driver circuit 20 shown in Fig. 1. As explained previously, the receiver can be used in a mode which allows it to scan ultrasonic frequencies from 20 kHz to 100 kHz or it can be used in a preferred 40 kHz band. When used in the preferred 40 kHz band, capacitors 212 and 214 as well as inductance 216, are used to create a resonant circuit with a frequency response centered about 40 kHz. This will increase the size of the voltage at 40 kHz up to 40 times and will greatly attenuate frequencies removed from this center band. When this resonant circuit is used it is important that transistor 220 be a MOSFET.

The gain of the preamplifier is controlled by variable resistance 16' shown in Fig. 1. The voltage derived from the variable resistance is applied to the drains of transistors 220, 230 through respective resistances. Because the output level is achieved in this manner, i.e. with the amplitude control being outside the signal path, any scratchiness in resistor 16' will not be heard in the microphones 38. In addition, any overload in the preamplifier is easily compensated by reducing the voltage level to the circuit.

The transducers 210, regardless of how many are used, are serially-wired together and are spaced close together, preferably in a flat plane. Having these transducers arranged next to each other on a flat plane effectively focuses the overall transducer at infinity. If desired, the transducers could be located on a curved or parabolic surface such that they would be focused to receive energy originating from a source at any distance closer than infinity. However, in most cases this is not necessary.

Referring once more to Fig. 1 the detection of a leak 10' can also be achieved without an ultrasonic source if the container is pressurized and its interior surface is covered with a liquid having a particular range of surface tension. In such a case the liquid is caused to form small bubbles by the passage of the pressurized gas through the leak, which bubbles break and reform when they have obtained a diameter of from 0.127 to 0.508 mm (0.005 to 0.02 inches). Breaking of bubbles of this size produces ultrasonic energy that can be detected by the transducer of circuit 14. If the liquid has too low a surface tension, e.g. water, then the bubbles will not form and no improvement in results will be achieved. On the other hand, if the surface tension is too great, such as that for a viscous soap, the bubbles grow too large for ultrasonic energy generation when they burst and the rate of generation is too slow. Therefore, a balanced surface tension between these extremes is necessary. However, suitable liquids can easily be found with this characteristic by experimentation. One liquid which has been found to be particularly useful consists of a 4% aqueous solution of sodium (2) ethyl hexyle sulfate, i.e., $C_4H_9CH(C_2H_5)$—$CH_2SO_4Na$. With this liquid the popping noise created by the forming and bursting of the bubbles is an excellent indicator of the existence of a leak. This liquid has a surface tension at 25°C of $6.3 \cdot 10^{-4}$ N/cm (63 dynes per centimeter). Water has a surface tension of about $2.3 \cdot 10^{-4}$ N/cm (23 dynes/cm). Thus liquids with surface tension in the range of 5 to $7 \cdot 10^{-4}$ N/cm (50—70 dynes/cm) are preferable.

With this liquid small leaks which cannot be detected will produce bubbles. When these bubbles break, however, they do produce ultrasonic energy which can be detected.

While the present invention has been particularly shown and described with reference to a preferred embodiment thereof, it will be understood by those skilled in the art that various changes in form and details may be made therein without departing from the scope of the invention as claimed.

## Claims

1. Apparatus for indicating the presence of ultrasonic energy comprising:

an ultrasonic generator (12) for producing an electrical oscillation in a narrow ultrasonic band of frequencies, including sweep means (120, 122, 124) for causing the output of said ultrasonic generator to vary within a narrow band of frequencies at a periodic frequency rate that is no higher than the upper limit of the audio range;

an ultrasonic transducer means (14; 210) for converting ultrasonic energy into electrical energy having a related ultrasonic frequency;

an amplifier means (16, 20) for amplifying the electrical energy produced by said transducer means (14; 210) to produce an amplified ultrasonic signal;

a heterodyne means for translating the frequency of the amplified ultrasonic signal into the audio frequency range by modulating it with a carrier frequency signal whose frequency differs from the ultrasonic frequency by a frequency within the audio range, an indicator means (26, 38) responsive to the amplitude of the audio frequency signal for indicating an output level related to the level of the ultrasonic energy characterized in that said heterodyne means include a carrier frequency signal generator and a suppressed-carrier amplitude modulator means for modulating said amplified ultrasonic signal with said carrier signal to produce an output audio frequency signal related to the amplified ultrasonic signal, said heterodyne means further including a feedback means (23, 26', 27, 28) for assuring suppressed-carrier operation of said suppressed-carrier modulator means by feeding part of the output signal of said suppressed-carrier modulator means back to said suppressed-carrier modulator means, said suppressed-carrier modulator means producing suppressed carrier operation when a particular bias voltage is applied to it and said heterodyne means further including variable bias voltage source means (28) for supplying the bias voltage to said suppressed-carrier modulator means.

2. Apparatus as claimed in claim 1 wherein said apparatus is adapted to indicate ultrasonic energy having a wide range of ultrasonic frequencies, said carrier frequency signal generator being adjustable to change said carrier frequency signal so that the ultrasonic energy at different parts of its range of frequencies is indicated.

3. Apparatus as claimed in claim 1 wherein said ultrasonic transducer means (210) comprises at least two piezoelectric crystals electrically connected in series and spaced adjacent each other on a generally planar surface such that they are both exposed to said ultrasonic energy, the degree of curvature of said planar surface being related to the distance from said surface for which said transducer means is focused to receive ultrasonic energy.

4. Apparatus as claimed in claim 3 wherein the ultrasonic transducer means (210) comprises three crystals positioned adjacent each other on a flat planar surface.

5. Apparatus as claimed in claim 3 wherein said amplifier means comprises an input field-effect transistor (220), said crystals being connected in series between a gate terminal (G) of said field-effect transistor (220) and a common reference level, said input field-effect transistor (220) being biased to have a high impedance

between the gate terminal (G) and the common reference level sufficient to avoid loading the series arrangement of crystals.

6. Apparatus as claimed in claim 5 wherein said amplifier means further includes a second field-effect transistor (230) connected as an amplifier, said input field-effect transistor (220) also being connected as an amplifier and supplying its output to the input of the amplifier formed by the second field-effect transistor (230).

7. Apparatus as claimed in claim 1 wherein said apparatus is adapted to indicate ultrasonic energy in a narrow band of ultrasonic frequencies, said amplifier means includes a resonant circuit (21) at its input which is tuned to the center of the narrow band of frequencies, and said carrier frequency signal generator produces a carrier frequency signal at one frequency which differs from the narrow band of ultrasonic energy frequencies by a frequency within the audio range.

8. Apparatus as claimed in claim 1 wherein the amplification produced by said amplifier means (16) is variable by varying a power supply voltage level applied to said amplifier means and used to operate it.

9. Apparatus as claimed in claim 1 wherein said feedback means (23, 26', 27, 28) comprise

filter means (26') for blocking the audio frequency signal and passing the carrier frequency signal if present, said filter means receiving the output of said modulator,

means (27') for averaging the carrier frequency output of said filter means (26') over a period of time to produce an error signal, and

means (28) for applying the error signal to the variable bias voltage source so as to change the output bias voltage in such a way as to eliminate the carrier signal in the output of the modulator.

10. Apparatus as claimed in claim 1 wherein said indicator means includes means (26) for converting the audio frequency signal into sound waves, the amplitudes of which are a measure of the ultrasonic energy.

11. Apparatus as claimed in claims 1 or 10 wherein said indicator means includes a meter (38) and means (35) for converting the audio frequency signal into a signal suitable for display by said meter (38).

12. Apparatus as claimed in claim 1 further including a battery (40) having an output voltage, a voltage level generator (42) operated from the output voltage of said battery (40) for supplying voltage to said apparatus, and a recharge indicator means (46) for indicating when the output voltage of said battery (40) is below a predetermined level.

13. Apparatus as claimed in claim 12 wherein said recharge indicator means comprises

a first Darlington transistor (47) arrangement connected as a first amplifier,

means for applying a portion of the battery output voltage to the input of the first amplifier,

a second Darlington transistor arrangement (45) connected as a second amplifier, said second amplifier receiving the signal amplified by the first amplifier, and

a light-emitting diode (46') connected to the output of said second amplifier such that when the portion of the output voltage falls below the predetermined level the first Darlington transistor arrangement (47) stops conducting current, causing the second Darlington transistor arrangement (45) to draw current through the light-emitting diode (46').

14. Apparatus as claimed in claim 1 wherein said ultrasonic generator (12) comprises:

an oscillator circuit means for producing an electrical oscillation in the narrow ultrasonic band of frequencies, said oscillator means including a feedback path that includes a piezoelectric crystal (114), said crystal having a resonant frequency in said narrow band of frequencies and converting the electrical oscillation signals in the feedback path into ultrasonic energy.

15. Apparatus as claimed in claim 14 wherein said oscillator circuit means is a transistor oscillator with at least one transistor (110) and said sweep means (120, 122, 124) is a means for periodically varying the bias applied to said transistor (110).

16. Apparatus as claimed in claim 15 wherein said sweep means comprises a capacitance (122) charged from a voltage source through a resistance (120), and a threshold voltage level conduction device (124) connected across said capacitance (122), said conduction device having a low impedance when the voltage across it is greater than a particular level and a high impedance when the voltage is below the particular level, the values of the resistance (120), capacitance (122) and particular level being related so that the bias voltage builds up from a first level to a second level at one rate and then returns to the first level at a different rate when the particular level is exceeded and the capacitance (122) is discharged through the conduction device (124), said buildup and return occuring at the periodic frequency rate.

17. Apparatus as claimed in claims 14 or 15 wherein the periodic frequency rate is in the range from 5 to 20 Hz.

18. Method of detecting small openings (10') or thin spots in a container (10), involving the steps of positioning a source (12) of ultrasonic energy within said container (10), detecting the existence of ultrasonic energy outside the container with an ultrasonic detector including a modulator that converts ultrasonic energy into energy in the audio range, and locating the origin of the ultrasonic energy outside the container by passing the ultrasonic detector over the outer surface of the container to locate the position at which the largest audio energy signal is obtained, characterized by the step of sweeping the frequencies of the ultrasonic source (12) over a band of frequencies at a rate below the upper limit of the audio range so that no standing wave node continuously exists at one location on the surface of the container (10) and assuring suppressed carrier operation by feeding part of the modulator output back to the modulator.

19. The method of claim 18 wherein the sweep frequency of the ultrasonic source is in the range of 5 to 20 Hz.

**Patentansprüche**

1. Vorrichtung zum Nachweis von Ultraschallenergie mit

einem Ultraschallgenerator (12) zur Erzeugung von elektrischen Oszillationen in einem schmalen Ultraschallfrequenzband, mit Wobbelmitteln (120, 122, 124), die dazu führen, daß das Ausgangssignal des Ultraschallgenerators in einem schmalen Frequenzband periodisch mit einer- Wobbelfrequenz variiert, die nicht größer als die obere Grenze des Hörbereichs ist;

mit Ultraschallwandlermitteln (14; 210) zur Umwandlung von Ultraschallenergie in elektrische Energie, die eine entsprechende Ultraschallfrequenz aufweist;

mit Verstärkermitteln (16, 20) zur Verstärung der von den Wandlermitteln (14; 210) erzeugten elektrischen Energie, um ein verstärktes Ultraschallsignal zu erzielen;

Heterodynmittel zur Umsetzung der Frequenz des verstärkten Ultraschallsignals in den Hörfrequenzbereich, dadurch, daß dieses mit einem Trägerfrequenzsignal moduliert wird, dessen Frequenz sich von der Ultraschallfrequenz durch eine Frequenz innerhalb des Hörbereichs unterscheidet, mit Anzeigemittel (26, 38), die auf die Amplitude des Hörfrequenzsignals ansprechen, um ein Signal mit einem Ausgangspegel anzuzeigen, der dem Pegel der Ultraschallenergie entspricht, dadurch gekennzeichnet, daß die Heterodynmittel einen Trägerfrequenzsignalgenerator und Amplitudenmodulatormittel mit Trägeramplitudenunterdrückung aufweisen, um das verstärkte Ultraschallsignal mit dem Trägersignal zu modulieren und so ein Ausgangs-Hörfrequenzsignal zu erzeugen, das dem verstärkten Ultraschallsignal entspricht, wobei die Heterodynmittel des weiteren Rückkopplungsmittel (23, 26', 27, 28) umfassen, um den Trägerunterdrückungsbetrieb der Modulatormittel mit Trägerunterdrückung dadurch zu ermöglichen, daß ein Teil des Ausgangssignals der Modulatormittel mit Trägerunterdrückung an die Modulatormittel mit Trägerunterdrückung zurückgekoppelt wird, welche Modulatormittel mit Trägerunterdrückung Trägerunterdrückungs-Betrieb durchführen, wenn eine bestimmte Vorspannung an diese angelegt wird, wobei ferner die Heterodynmittel des weiteren variable Vorspannungsquellenmittel (28) enthalten, um die Vorspannung an die Modulatormittel mit Trägerunterdrückung zu liefern.

2. Vorrichtung nach Anspruch 1, die geeignet ist, Ultraschallenergie anzuzeigen, die einen weiten Bereich von Ultraschallfrequenzen umfaßt, wobei der Trägerfrequenzsignalgenerator einstellbar ist, um das Trägerfrequenzsignal zu ändern, so daß die Ultraschallenergie an verschiedenen Stellen seines Frequenzbereichs angezeigt wird.

3. Vorrichtung nach Anspruch 1, bei der die Ultraschallwandlermittel (210) mindestens zwei piezoelektrische Kristalle umfassen, die elektrisch in Serie geschaltet und nebeneinander auf einer im allgemeinen planaren Oberfläche angeordnet sind, so daß sie beide der Ultraschallenergie ausgesetzt sind, wobei der Grad der Krümmung der planaren Oberfläche in Beziehung steht zu dem Abstand von der Fläche, für die die Wandlermittel fokussiert sind, um Ultraschallenergie zu empfangen.

4. Vorrichtung nach Anspruch 3, bei der die Ultraschallwandlermittel (210) drei Kristalle aufweisen, die nebeneinander auf einer flachen, planaren Oberfläche angeordnet sind.

5. Vorrichtung nach Anspruch 3, bei der die Verstärkermittel einen Eingangs-Feldeffekt-Transistor (220) umfassen, wobei die Kristalle in Serie zwischen einen Gate-Anschluß (G) des Feldeffekt-Transistors (220) und einen gemeinsamen Referenzpegel geschaltet sind, wobei ferner der Eingangs-Feldeffekt-Transistor (220) so vorgespannt ist, daß er eine hohe Impedanz zwischen dem Gate-Anschluß (G) und dem gemeinsamen Referenzpegel aufweist, die ausreicht, um ein Aufladen der Serienschaltung der Kristalle zu vermeiden.

6. Vorrichtung nach Anspruch 5, bei der die Verstärkungsmittel des weiteren einen zweiten Feldeffekt-Transistor (230) aufweisen, der als Verstärker geschaltet ist, wobei der Eingangs-Feldeffekt-Transistor (220) ebenfalls als Verstärker geschaltet ist und sein Ausgangssignal an den Eingang des durch den zweiten Feldeffekttransistor (230) gebildeten Verstärkers liefert.

7. Vorrichtung nach Anspruch 1, bei der die Vorrichtung geeignet ist, Ultraschallenergie in einem schmalen Band von Ultraschallfrequenzen anzuzeigen, wobei die Verstärkermittel einen Resonanzkreis (21) eingangsseitig enthalten, der auf die Mitte des schmalen Frequenzbandes abgestimmt ist, wobei ferner und der Trägerfrequenzsignalgenerator ein Trägerfrequenzsignal mit einer Frequenz erzeugt, die sich von dem schmalen Band von Ultraschallenergiefrequenzen durch eine Frequenz innerhalb des Hörbereichs unterscheidet.

8. Vorrichtung nach Anspruch 1, bei der die durch die Verstärkermittel (16) hervorgerufene Verstärkung dadurch variierbar ist, daß der Spannungspegel einer Spannungsversorgung variiert wird, welche Spannungsversorgung die Spannung an die Verstärkermittel zu deren Betrieb liefert.

9. Vorrichtung nach Anspruch 1, bei der die Rückkopplungsmittel (23, 26', 27, 28) folgendes aufweisen:

Filtermittel (26'), die das Hörfrequenzsignal unterdrücken und das Trägerfrequenzsignal, sofern vorhanden, passieren lassen, welche Filtermittel das Ausgangssignal des Modulators erhalten,

Mittel (27'), zum Ausmitteln des Trägerfrequenzausgangssignals der Filtermittel (26') über eine Zeitperiode, um ein Fehlersignal zu erzeugen und

Mittel (28), um das Fehlersignal der variablen Spannungsquelle zuzuführen, um die Ausgangsvorspannung in einer solchen Weise zu ändern, daß das Trägersignal am Ausgang des Modulators entfernt wird.

10. Vorrichtung nach Anspruch 1, bei der die Anzeigemittel Mittel (26) zur Umwandlung des Hörfrequenzsignals in Schallwellen umfassen, wobei deren Amplituden ein Maß für die Ultraschallenergie sind.

11. Vorrichtung nach Anspruch 1 oder Anspruch 10, bei der die Anzeigemittel ein Meßinstrument (38) und Mittel (35) aufweisen, um das Tonfrequenzsignal in ein Signal umwandeln, das sich mit dem Meßinstrument (38) anzeigen läßt.

12. Vorrichtung nach Anspruch 1, die des weiteren folgendes aufweist:

eine Batterie (40) mit einer Ausgangsspannung, einen Spannungspegelgenerator (42), der von der Ausgangsspannung der Batterie (40) betrieben wird, um der Vorrichtung Spannung zuzuführen, und ein Wiederaufladeanzeigemittel (46), um anzuzeigen, wenn die Ausgangsspannung der Batterie (40) unterhalb eines bestimmten Pegels liegt.

13. Vorrichtung nach Anspruch 12, bei der die Wiederaufladungsanzeigemittel folgendes aufweisen:

eine erste Darlington-Transistorschaltung (47), die als erster Verstärker geschaltet ist,

Mittel zum Anlegen eines Teils der Batterieausgangsspannung an den Eingang des ersten Verstärkers,

eine zweite Darlington-Transistorschaltung (45), die als zweiter Verstärker geschaltet ist, welcher zweite Verstärker das durch den ersten Verstärker verstärkte Signal erhält, und

eine licht-emittierende Diode (46'), die an den Ausgang des zweiten Verstärkers angeschlossen ist, so daß in dem Fall, daß der Teil der Ausgangsspannung unter einen vorgegebenen Pegel fällt, die erste Darlington-Transistorschaltung (47) die Stromleitung sperrt, und dazu führt, daß die zweite Darlington-Transistorschaltung (45) Strom durch die lichtemittierende Diode (46') zieht.

14. Vorrichtung nach Anspruch 1, bei der der Ultraschallgenerator (12) folgendes aufweist:

Oszillatormittel zur Erzeugung einer elektrischen Oszillation in dem schmalen Ultraschallfrequenzband, welche Oszillatormittel einen Rückkopplungsweg aufweisen, der einen piezoelektrischen Kristall (114) enthält, welcher Kristall eine Resonanzfrequenz in dem schmalen Frequenzband hat und die elektrischen Oszillationssignale in dem Rückkopplungsweg in Ultraschallenergie verwandelt.

15. Vorrichtung nach Anspruch 14, bei der die Oszillatormittel ein Transistoroszillator sind, mit mindestens einem Transistor (110), wobei ferner die Wobbelgeneratormittel (120, 122, 124) Mittel sind, um periodisch die an den Transistor (110) angelegte Vorspannung zu variieren.

16. Vorrichtung nach Anspruch 15, bei der die Wobbelgeneratormittel eine Kapazität (122) enthalten, die von einer Spannungsquelle über einen Widerstand (120) geladen wird, und ein Schwellenspannungsschalter (124) über die Kapazität (122) geschaltet ist, welcher Spannungsschalter eine niedere Impedanz aufweist, wenn die an ihm liegende Spannung größer als ein bestimmter Pegel ist, und eine hohe Impedanz aufweist, wenn die Spannung unterhalb des bestimmten Pegels ist, wobei die Werte des Widerstandes (120), der Kapazität (122) und des bestimmten Pegels so abgestimmt sind, daß die Vorspannung von einem ersten Pegel auf einen zweiten Pegel mit einer Geschwindigkeit ansteigt und dann auf den ersten Pegel mit einer unterschiedlichen Geschwindigkeit zurückfällt, wenn der bestimmte Pegel überschritten wird, wobei die Kapazität (122) über die Schalteinrichtung (124) entladen wird und das Ansteigen und Zurückfallen mit der Wobbelfrequenz erfolgt.

17. Vorrichtung nach Anspruch 14 oder 15, bei der die Wobbelfrequenz in dem Bereich von 5 bis 20 Hz liegt.

18. Verfahren zum Nachweis von kleinen Löchern (10') oder dünnen Stellen in einem Behälter (10), wobei eine Ultraschallenergiequelle (12) innerhalb des Behälters (10) positioniert wird, das Vorhandensein von Ultraschallenergie außerhalb des Behälters mit einem einen Modulator enthaltenden Ultraschalldetektor nachgewiesen wird, welcher Modulator die Ultraschallenergie in Energie im Hörfrequenzbereich umwandelt, wobei der Ursprung der Ultraschallenergie außerhalb des Behälters dadurch lokalisiert wird, daß der Ultraschalldetektor über die Außenfläche des Behälters geführt wird, um diejenige Position zu ermitteln, bei der das stärkste Energiesignal im Hörfrequenzbereich erhalten wird, dadurch gekennzeichnet, daß die Frequenzen der Ultraschallquelle (12) über ein Frequenzband gewobbelt werden mit einer Wobbelfrequenz unterhalb der Obergrenze des Hörbereichs, so daß keine stehenden Wellenknoten kontinuierlich an einer bestimmten Stelle an der Oberfläche des Behälters (10) existieren, und daß der Betrieb mit Trägerfrequenzunterdrückung dadurch sichergestellt wird, daß ein Teil des Modulatorausgangsignals an den Modulator zurückgekoppelt wird.

19. Verfahren nach Anspruch 18, bei dem die Wobbelfrequenz der Ultraschallquelle im Bereich von 5 bis 20 Hz liegt.

**Revendications**

1. Appareil pour indiquer la présence d'une énergie ultrasonique, comprenant:

un générateur ultrasonique (12) pour produire une oscillation électrique dans une étroite bande ultrasonique de fréquences, comportant des moyens de balayage (120, 122, 124) pour faire varier la sortie de ce générateur ultrasonique à l'intérieur d'une étroite bande de fréquences, cette variation périodique ayant lieu à une fréquence non supérieure à la limite supérieure de la plage audio;

des moyens transducteurs ultrasoniques (14; 210) pour transformer l'énergie ultrasonique en énergie électrique ayant une fréquence ultrasonique en rapport;

des moyens amplificateurs (16; 20) pour amplifier l'énergie électrique produite par les moyens transducteurs (14; 210) pour produire un signal ultrasonique amplifié;

des moyens hétérodynes pour transformer la fréquence du signal ultrasonique amplifié dans la plage des fréquences audio en le modulant avec un signal de fréquence porteuse, dont la fréquene diffère de la fréquence ultrasonique d'une fréquence à l'intérieur de la plage audio, des moyens indicateurs (26, 38) sensibles à l'amplitude du signal de fréquence audio pour indiquer un niveau de sortie fonction du niveau de l'énergie ultrasonique, caractérisé en ce que ces moyens hétérodynes comportent un générateur de signaux de fréquence porteuse et des moyens modulateurs d'amplitude de la porteuse supprimée pour moduler ce signal ultrasonique amplifié avec le signal de la porteuse pour produire un signal de fréquence audio de sortie fonction du signal ultrasonique amplifié, ces moyens hétérodynes comprenant en outre des moyens de rétroaction (23, 26', 27, 28) pour assurer le fonctionnement en porteuse supprimée de ces moyens modulateurs en porteuse supprimée en ramenant une partie du signal de sortie des moyens modulateurs à ces mêmes moyens modulateurs, ces moyens modulateurs fonctionnant en porteuse supprimée lorsqu'une tension de polarisation particulière leur est appliquée, et ces moyens hétérodynes comprenant en outre une source de tension de polarisation variable (28) pour fournir la tension de polarisation aux moyens modulateurs.

2. Appareil selon la revendication 1, qui est adapté pour indiquer une énergie ultrasonique ayant une large plage de fréquences ultrasoniques, le générateur de signaux de fréquence porteuse pouvant être réglé pour modifier le signal de fréquence porteuse de façon à indiquer l'énergie ultrasonique à différents points de sa plage de fréquences.

3. Appareil selon la revendication 1, dans lequel les moyens transducteurs ultrasoniques (210) comprennent au moins deux cristaux piézoélectriques électriquement montés en série et disposés adjacents l'un à l'autre sur une surface généralement plane, de façon à être tous deux exposés à cette énergie ultrasonique, le degré de courbure de cette surface plane étant fonction de la distance à cette surface pour laquelle les moyens transducteurs sont focalisés pour recevoir l'énergie ultrasonique.

4. Appareil selon la revendication 3, dans lequel les moyens transducteurs ultrasoniques (210) comprennent trois cristaux disposés adjacents l'un à l'autre sur une surface plane.

5. Appareil selon la revendication 3, dans lequel les moyens amplificateurs comprennent un transistor à effet de champ d'entrée (220), ces cristaux étant montés en série entre une borne de porte (G) de ce transistor à effet de champ (220) et un niveau de référence commun, ce transistor à effet de champ d'entrée (220) étant polarisé pour avoir une impédance élevée entre la borne de porte (G) et le niveau de référence commun suffisante pour éviter de charger la disposition en série des cristaux.

6. Appareil selon la revendication 5, dans lequel les moyens amplificateurs comportent en outre un deuxième transistor à effet de champ (230) monté en tant qu'amplificateur, le transistor à effet de champ d'entrée (220) étant également monté en tant qu'amplificateur et amenant sa sortie à l'entrée de l'amplificateur formé par le deuxième transistor à effet de champ (230).

7. Appareil selon la revendication 1, adapté pour indiquer une énergie ultrasonique dans une étroite bande de fréquences ultrasoniques, les moyens amplificateurs comportant un circuit résonnant (21) au niveau de son entrée, qui est accordé sur le centre de l'étroite bande de fréquences, et le générateur de signaux de fréquence porteuse produisant un signal de fréquence porteuse pour une fréquence qui diffère de l'étroite bande de fréquences d'énergie ultrasonique d'une fréquence dans la plage radio.

8. Appareil selon la revendication 1, dans lequel l'amplification produite par les moyens amplificateurs (16) peut être modifiée en faisant varier un niveau de tension d'alimentation appliquée aux moyens amplificateurs et utilisés pour le faire fonctionner.

9. Appareil selon la revendication 1, dans lequel les moyens de rétroaction (23, 26', 27, 28) comprennent:

des moyens de filtre (26') pour bloquer le signal de fréquence audio et faire passer le signal de fréquence porteuse s'il y en a un, ces moyens de filtre recevant la sortie du modulateur,

des moyens (27') pour faire la moyenne de la sortie de la fréquence porteuse des moyens de filtre (26') sur une période donnée pour produire un signal d'erreur, et

des moyens (28) pour appliquer le signal d'erreur à la source de tension de polarisation variable, de façon à faire varier la tension de polarisation de sortie de manière à éliminer le signal porteur dans la sortie du modulateur.

10. Appareil selon la revendication 1, dans lequel les moyens indicateurs comportent des moyens (26) pour transformer le signal de fréquence audio en onde acoustique dont les amplitudes sont une mesure de l'énergie ultrasonique.

11. Appareil selon la revendication 1 ou la revendication 10, dans lequel les moyens indicateurs comportent un appareil de mesure (38) et des moyens (35) pour transformer le signal de fréquence audio en un signal approprié pour être affiché par cet instrument de mesure (38).

12. Appareil selon la revendication 1, comportant en outre une batterie (40) ayant une tension de sortie, un générateur de niveaux de tension (42) fonctionnant à partir de la tension de sortie de la batterie (40) pour fournir une tension à cet appareil, et des moyens indicateurs de recharge (46) pour indiquer que la tension de sortie de la batterie (40) se trouve en dessous d'un niveau prédéterminé.

13. Appareil selon la revendication 12, dans lequel les moyens indicateurs de recharge comprennent:

un premier agencement de transistor de Darlington (47) monté en tant que premier amplificateur,

des moyens pour appliquer une partie de la tension de sortie de la batterie à l'entrée du premier amplificateur,

un deuxième agencement de transistor de Darlington (45) monté en tant que deuxième amplificateur, ce deuxième amplificateur recevant le signal amplifié par le premier amplificateur,

et une diode électroluminescente (46') reliée à la sortie du deuxième amplificateur de façon que, lorsque la partie de la tension de sortie tombe en dessous du niveau prédéterminé, le premier agencement de transistor de Darlington (47) s'arrête de conduire le courant, amenant le deuxième agencement de transistor de Darlington (45) à tirer du courant par l'intermédiaire de la diode électroluminescente (46').

14. Appareil selon la revendication 1, dans lequel le générateur ultrasonique (12) comporte un circuit oscillateur pour produire une oscillation électrique dans l'étroite bande ultrasonique de fréquences, cet oscillateur comportant un trajet de retour qui contient un cristal piézoélectrique (114) ce cristal ayant une fréquence de résonance dans cette étroite bande de fréquences et transformant les signaux d'oscillations électriques dans le trajet de retour en énergie ultrasonique.

15. Appareil selon la revendication 14, dans lequel le circuit oscillant est un oscillateur à transistor, avec au moins un transistor (110) et dans lequel les moyens de balayage (120, 122, 124) font varier périodiquement la polarisation appliquée au transistor (110).

16. Appareil selon la revendication 15, dans lequel les moyens de balayage comportent une capacitance (122) chargée depuis une source de tension à travers une résistance (120), et un dispositif de conduction de niveaux de tension de seuil (124) monté en travers de cette capacitance (122), ce dispositif de conduction ayant une faible impédance lorsque la tension à travers lui est supérieure à une valeur particulière, et une impédance élevée lorsque la tension se trouve en dessous de cette valeur particulière, les valeurs de la résistance (120), de la capacitance (122) et de cette valeur particulière étant reliées ensemble de telle sorte que la tension de polarisation passe d'un premier niveau à un deuxième niveau à une vitesse déterminée et retourne ensuite au premier niveau à une vitesse différente lorsque la valeur particulière est dépassée et que la capacitance (122) est déchargée à travers le dispositif de conduction (124), cette montée et ce retour survenant à une fréquence correspondant à la variation périodique de fréquence.

17. Appareil selon la revendication 14 ou la revendication 15, dans lequel la variation périodique de fréquence a une période de 5 à 20Hz.

18. Procédé pour détecter de petites ouvertures (10') ou de minces points dans un récipient (10), comportant les stades suivants:

positionner une source (12) d'énergie ultrasonique à l'intérieur du récipient (10), détecter l'existence d'une énergie ultrasonique à l'extérieur du récipient avec un détecteur ultrasonique comportant un modulateur qui transforme l'énergie ultrasonique en énergie dans la plage audio, et positionner l'origine de l'énergie ultrasonique à l'extérieur du récipient en passant le détecteur ultrasonique sur la surface extérieure du récipient pour localiser la position pour laquelle on obtient le signal d'énergie audio le plus important, caractérisé en ce qu'on balaie les fréquences de la source ultrasonique (12) sur une bande de fréquences à une cadence inférieure à la limite supérieure de la plage audio, de sorte qu'aucun noeud d'ondee n'existe de façon continue à un emplacement sur la surface du récipient (10), et qu'on assure le fonctionnement en porteuse supprimée en ramenant au modulateur une partie de la sortie du modulateur.

19. Procédé selon la revendication 18, dans lequel la fréquence de balayage de la source ultrasonique est comprise entre 5 et 20 Hz.

FIG. 1

EP 0 151 115 B1

FIG. 2

AMPLITUDE

12 "WARBLE" TONE GEN.

B+

118

112

CASE

114

ULTRASONIC XDUCER

120

110

115

122

124

117

116

FLASHER
LED

ALTERNATE CONN-
ECTION OF TRANSFORM-
ER SECONDARY:

FIG. 3

16 TRANSDUCER
& PREAMP.

A

B

222

230

G  D

220

G  D  S

S

212

214

14

210

216

C

2